# EUROPÄISCHE PATENTSCHRIFT

(11) **EP 1 039 185 B1**
(45) Veröffentlichungstag und Bekanntmachung des Hinweises auf die Patenterteilung: **02.06.2004**
(21) Anmeldenummer: 00105864.3
(22) Anmeldetag: 20.03.2000
(51) Int. Cl.: F16K 1/12

(54) **Füllventil**
Filling valve
Soupape de remplissage

(30) Priorität: 23.03.1999 DE 29905320 U
(43) Veröffentlichungstag der Anmeldung: 27.09.2000
(73) Patentinhaber: HAWE Hydraulik GmbH & Co. KG, 81673 München (DE)
(72) Erfinder: Neumair, Georg, Dipl.-Ing. (FH), 85402 Thalhausen (DE)
(74) Vertreter: Grünecker, Kinkeldey, Stockmair & Schwanhäusser Anwaltssozietät

(56) Entgegenhaltungen:
- WO-A-97/14898
- FR-A- 1 153 344
- FR-A- 2 689 201
- US-A- 1 856 222

## Beschreibung

Die Erfindung betrifft ein Füllventil der im Oberbegriff des Anspruchs 1 angegebenen Art.

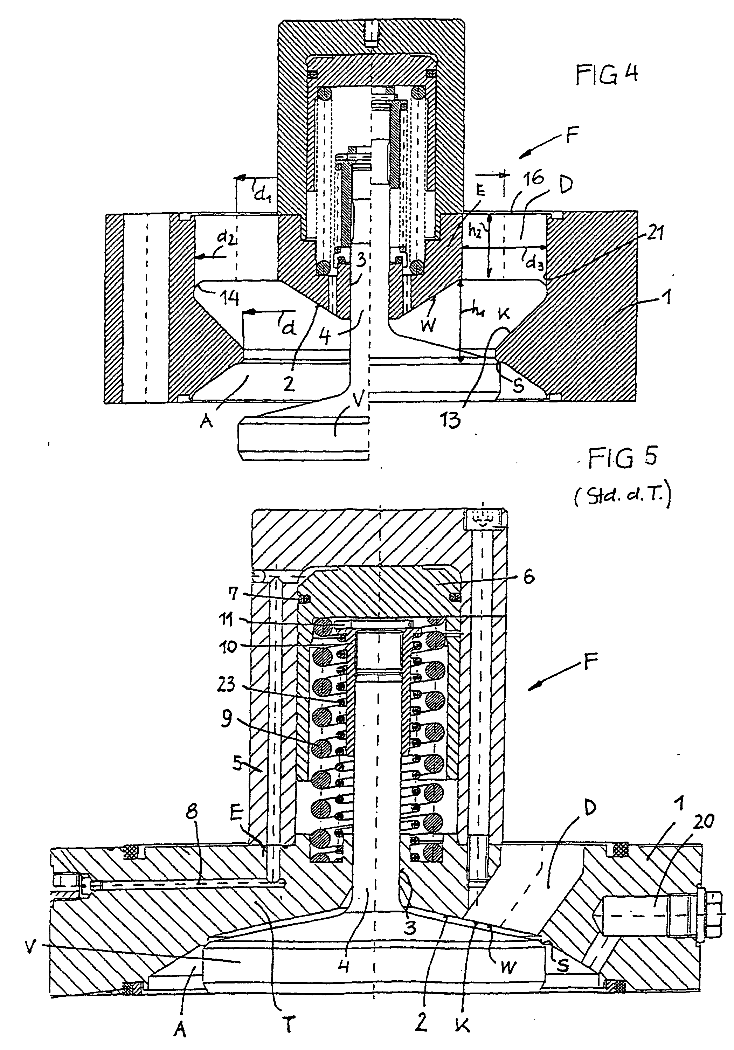

Bei dem durch Vorbenutzung bekannten Füllventil (Fig. 5) ist die Einstelleinrichtung des Ventilelementes von bezüglich der Schaftachse diametral gegenüberliegenden Tragstegen im Gehäuse abgestützt, von denen einer einen Entsperrkanal zum Verstellen des Ventilelementes aus der Schließstellung in die Offenstellung enthält. Beiderseits der Tragstege sind zwei nierenförmige Durchgänge im Gehäuse geformt, deren jeder schaftparallel an der Gehäuseaußenseite beginnt, schräg in Richtung zur Schaftachse abknickt und innerhalb des in Schaftrichtung projizierten Ventilsitzdurchmessers in die Füllkammerwandung mündet. Die Füllkammerwandung beginnt angrenzend an den Ventilsitz und folgt einem konkaven Kegelmantel bis zur Mündung des Ventilschaftdurchgangs in der Einstelleinrichtung. In der Einstelleinrichtung ist ein Entsperrkolben aus dem Entsperrkanal gegen eine gehäusefest abgestützte Rückstellfeder beaufschlagbar. Der Entsperrkolben greift am Schaft an einer Mutter an, die in Schließrichtung des Ventilelements von einer Nachsaugfeder belastet ist. Die Arbeitskammer des Gehäuses kommuniziert mit einem einen Pressenkolben enthaltenden Raum. Die nierenförmigen Durchgänge kommunizieren mit einem Druckmittelreservoir. Um den Pressenkolben möglichst schnell aus einer Ausgangsstellung zu einer Pressstellung zu bewegen, muss das Füllventil eine große Druckmittelmenge mit hoher Strömungsrate eintreten lassen. Das Ventilelement wird gegen die Nachsaugfeder in die volle Offenstellung gebracht, um das Druckmittel mit möglichst wenig Widerstand durch die Durchgänge, die Füllkammer und zwischen dem Ventilelement und dem Ventilsitz durchzuleiten. Sobald der Raum oberhalb des Pressenkolbens gefüllt ist, stellt die Nachsaugfeder das Ventilelement in die Schließstellung am Ventilsitz. Ein Presstakt wird bei in Schließstellung befindlichem Füllventil durchgeführt. Nach dem Presstakt muss zum Rückstellen des Pressenkolbens in die Ausgangsstellung wiederum eine große Druckmittelmenge rasch durch das Füllventil ausgeschoben werden. Zu diesem Zweck wird, gegebenenfalls nach einer anfänglichen Druckentlastung des Presskolbenraums, das Ventilelement vom Entsperrkolben in die Offenstellung verstellt. Bei modernen Hochleistungspressen sind schnelle Presstakte ein Muss. Es darf deshalb das nur eine Zubehörkomponente darstellende Füllventil keine spürbare Zeitverzögerung, vor allem beim Füllen, bewirken. Bei dem bekannten Füllventilkonzept beträgt bauartbedingt der in der Offenstellung für die Druckmittelströmung nutzbare Querschnitt durch die Füllkammer nur ca. 70 % des Nennquerschnitts, d.h. des Ventilsitzquerschnitts abzüglich des Schaftquerschnitts. Diese Querschnittsengstelle beim Eintritt in die Füllkammer führt zu einer unerwünschten Zeitverzögerung zumindest beim Füllen.

In dem gattungsgemäßen, aus WO97/14898 bekannten Ventil ist das Ventilelement an seinem Außenumfang durch eine parallel zum Ventilschaft verlaufende, zylindrische Schürze verlängert, die in einer Ringkammer der Verstelleinrichtung verschiebbar ist und den Innenquerschnitt der Füllkammer, d.h. den Strömungsweg in den Ventilsitz, in etwa auf den Querschnitt des Ventilsitzes begrenzt. Der an den Ventilsitz angrenzende Wandabschnitt erweitert sich kegelig nach außen und endet an dem von den Tragstegen gebildeten Wandabschnitt. In der vollen Offenstellung des Ventilelements liegt stromab der Mündungen der Durchgänge zwischen den Tragstegen zwischen dem an den Ventilsitz angrenzenden, kegeligen Wandabschnitt und der kegeligen Nase des Ventilelements ein sich konisch in den Ventilsitz verjüngender Ringraum vor. Diese Bauweise bedingt eine allmähliche Verengung des nutzbaren Strömungswegs aus den Durchgängen in den Ventilsitz. Das Ventilelement ist in der vollen Offenstellung zur Verstelleinrichtung hin verstellt.

Bei dem aus US 1 856 222 A bekannten Stromsteuer- und Rückschlagventil liegt in der vollen Offenstellung des kegeligen, und zur Verstelleinrichtung zurückgezogenen Ventilelements bauartbedingt im Strömungsweg von einem außenliegenden Ringraum bis in den Ventilsitz eine Querschnittsverengung vor.

Hinzuweisen ist ferner auf FR 1 153 344 A und FR 2 689 201 A.

Der Erfindung liegt die Aufgabe zugrunde, ein Füllventil der eingangs genannten Art zu schaffen, bei dem eine Querschnittsengstelle im Strömungsweg vermieden ist.

Die gestellte Aufgabe wird mit den im Anspruch 1 enthaltenen Merkmalen gelöst.

Da erfindungsgemäß die Füllkammerwandung angrenzend an den Ventilsitz über den in Schaftrichtung projizierten Ventilsitzdurchmesser hinaus zurückweicht, der Wandabschnitt an den Tragstegen relativ weit vom Ventilsitz beabstandet und großdurchmessrig ist, und die Durchgänge zumindest teilweise außerhalb des in Schaftrichtung projezierten Ventilsitzdurchmessers in die Füllkammerwandung münden, und die Endwand der Verstelleinrichtung bis zur Verschneidung mit dem Wandabschnitt an den Tragstegen zurückweicht, lässt sich für die Druckmittelströmung zwischen dem Eintritt in die Durchgänge und dem Durchtritt durch den Ventilsitz nahezu der volle Nennquerschnitt nutzen, der durch den Ventilsitz abzüglich des Schaftquerschnitts des Ventilelements definiert ist. Durch die Gestaltung der Füllkammerwandung und die Anordnung der Durchgänge lassen sich problemlos ca. 90 % des Nennquerschnitts auch durch die Füllkammer und bis zum Ventilsitz nutzen. Es liegt keine spürbare Querschnittsengstelle mehr vor. Eine durch das Füllventil bedingte Zeitverzögerung ist damit minimiert. Der innerhalb der Durchgänge vorliegende, konvexe Bereich der Füllkammerwandung bzw. der Endwand der Verstelleinrichtung trägt zu günstigen Strömungsverhältnissen und einem möglichst unbeschränkten Strömungsquerschnitt bei.

Der außenliegende Übergang in der Füllkammerwandung ist im Hinblick auf günstige Strömungsverhältnisse und eine einfache Herstellung konkav gerundet.

Wenn die Durchgänge zumindest in etwa schaftparallele zylindrische Bohrungen sind, gelangt das Druckmittel auf kürzestem Weg in die Füllkammer. Ferner sind zylindrische Bohrungen einfach herstellbar. Es ergibt sich eine Vielzahl von Tragstegen, die die Gestaltfestigkeit erhöhen.

Jede Bohrung kann mit einer kegeligen Verlängerung in die Füllkammerwand übergeführt sein, um saubere Strömungsverhältnisse zu erzielen und eine Querschnittsverengung zu vermeiden.

Für günstige Strömungsverhältnisse und eine dennoch stabile Abstützung der Einstelleinrichtung ist es zweckmäßig, wenn die Tragstege in etwa konstante Höhen haben.

Ein optimaler Kompromiss zwischen der stabilen Abstützung der Einstelleinrichtung und dem nutzbaren Querschnitt für die Druckmittelströmung ist gegeben, wenn der maximale Durchmesser der Füllkammer bei ca. 125 % des Ventilsitzdurchmessers liegt.

Günstig ist es ferner, wenn die maximale Tiefe der Füllkammer ca. 27 % des Ventilsitzdurchmessers beträgt. Zweckmäßig ist es weiterhin, wenn die Achsen der Durchmesser auf einem Teilkreis mit ca. 105 % des Ventilsitzdurchmessers liegen und jeder Durchgang einen Durchmesser von ca. 33 % des Ventilsitzdurchmessers hat.

Bei einer konkreten Ausführungsform mit einem Ventilsitzdurchmesser von ca. 197 mm sind acht Durchgänge und acht Tragstege vorgesehen, wobei die Durchgänge einen Durchmesser von ca. 65 mm haben und mit ihren Achsen auf einem Teilkreis mit ca. 205 mm Durchmesser liegen.

Anhand der Zeichnung wird eine Ausführungsform des Erfindungsgegenstandes beschrieben, sowie eine Ausführungsform eines bekannten Füllventils. Es zeigen:
- Fig. 1: einen Achsschnitt eines Füllventils in der Schnittebene I - I von Fig. 3, und zwar in der linken Hälfte in der Offenstellung des Füllventils, in der rechten Hälfte hingegen in der Schließstellung des Füllventils,
- Fig. 2: einen Achsschnitt des Füllventils in der Schnittebene II - 11 von Fig. 3,
- Fig. 3: eine Draufsicht des Füllventils unter Weglassung von Komponenten,
- Fig. 4: einen Achsschnitt einer weiteren Ausführungsform, und
- Fig. 5: einen Achsschnitt eines bekannten Füllventils in Schließstellung.

Zunächst wird anhand Fig. 5 ein Füllventil F einer bekannten und seit Jahren in der Praxis für Hochleistungspressen verwendeten Ausführungsform erläutert.

Das Füllventil F in Fig. 5 besitzt ein scheibenförmiges massives Gehäuse 1, in dem zwischen einer Füllkammer K und einer Arbeitskammer A ein ringförmiger Ventilsitz S geformt ist. Mit dem Ventilsitz S arbeitet ein Ventilelement V nach Art eines Sitzventils zusammen, das einen nach oben weisenden, zentrischen Schaft 4 besitzt. Die Arbeitskammer A kommuniziert mit einem nicht dargestellten Raum eines Pressenkolbens, der aus einer Grundstellung nahe dem Füllventil F, z.B. in Richtung des Schaftes 4, zu einer Pressstellung verfahren wird. Die Füllkammer K wird begrenzt durch eine Füllkammerwandung W, die angrenzend an den Ventilsitz S beginnt, einem Kegelmantel mit großem Kegelwinkel folgt und sich bis zu einem Schaftdurchgang 3 erstreckt. Die Füllkammerwandung W verläuft in etwa parallel zur Oberseite des Ventilelementes V. Teil der Füllkammerwandung W ist eine Endwand 2 einer in das Gehäuse 1 integrierten Einstellvorrichtung E, die im Gehäuse 1 durch mehrere Tragstege T abgestützt ist Zwischen den Tragstegen T sind in das Gehäuse 1 Durchgänge D eingeformt, die an der Oberseite des Gehäuses 1 beginnen und in der Füllkammerwandung W innerhalb des Ventilsitzdurchmessers S münden. Die Durchgänge D sind nierenförmig ausgebildet. Die Einstelleinrichtung E umfasst ein Gehäuse 5, in das der Schaft 4 ragt und in dem ein Entsperrkolben 6 mit Dichtungen 7 verschieblich geführt ist, der über einen durch einen Tragsteg T verlaufenden Entsperrkanal 8 hydraulisch beaufschlagbar ist, um das Ventilelement V aus der gezeigten Schließstellung in die nicht gezeigte Offenstellung nach unten zu verstellen. Der Entsperrkolben 6 wird durch eine Rückstellfeder 9 belastet. Auf dem Schaft 4 sitzt eine Mutter 10, die mit einer Sicherung 11 gesichert ist und durch eine Nachsaugfeder 12 in Schließrichtung des Ventilelementes V belastet wird.

Bei der Bewegung des nicht gezeigten Pressenkolbens aus seiner Grundstellung wird das Ventilelement V aus der gezeigten Schließstellung in die volle Offenstellung gestellt, in der die Mutter 10 auf Anschlag geht. Das Druckmittel strömt durch die Durchgänge D, die Füllkammer K und den Ventilsitz S entlang der Oberseite des Ventilelementes V in die Arbeitskammer A. Sobald der Pressenkolben die gewünschte Position erreicht und zwischen den Durchgängen D und der Arbeitskammer A ein weitgehender Druckausgleich stattgefunden hat, wird das Ventilelement V durch die Nachsaugfeder 12 in die Schließstellung verstellt. Dann wird ein Presstakt eingeleitet, der durch nicht gezeigte Mittel gesteuert wird, wobei das Füllventil F in seiner Schließstellung bleibt. Ist danach der Pressenkolben in die Grundstellung zurückzustellen, dann wird, gegebenenfalls nach einem Druckabbau über eine Entlastungskomponente 20, der Entsperrkolben 6 aus dem Entsperrkanal 8 hydraulisch beaufschlagt, um über die Mutter 10 und gegen die Kräfte der Federn 9, 12 das Ventilelement V in die Offenstellung zu verstellen. Das Druckmittel aus dem Presszylinder wird durch den Ventilsitz S, die Füllkammer K und die Durchgänge D ausgeschoben.

Da die Durchgänge D innerhalb des in Schaftrichtung projizierten Ventilsitzdurchmessers in die Füllkammerwandung W münden, und die Füllkammerwandung W annähemd parallel zur Oberseite des Ventilelementes verläuft, wird besonders im Mündungsbereich der Durchgänge D eine Querschnittsengstelle gebildet, d.h. dass dort nur ein Teil des Nennquerschnitts (Querschnitt des Ventilsitzes S abzüglich des Querschnittes des Schaftes 4) für die Druckmittelströmung zur Verfügung steht. Dies bewirkt eine Drosselung der Druckmittelströmung, insbesondere beim raschen Füllen, und damit eine unerwünschte Zeitverzögerung.

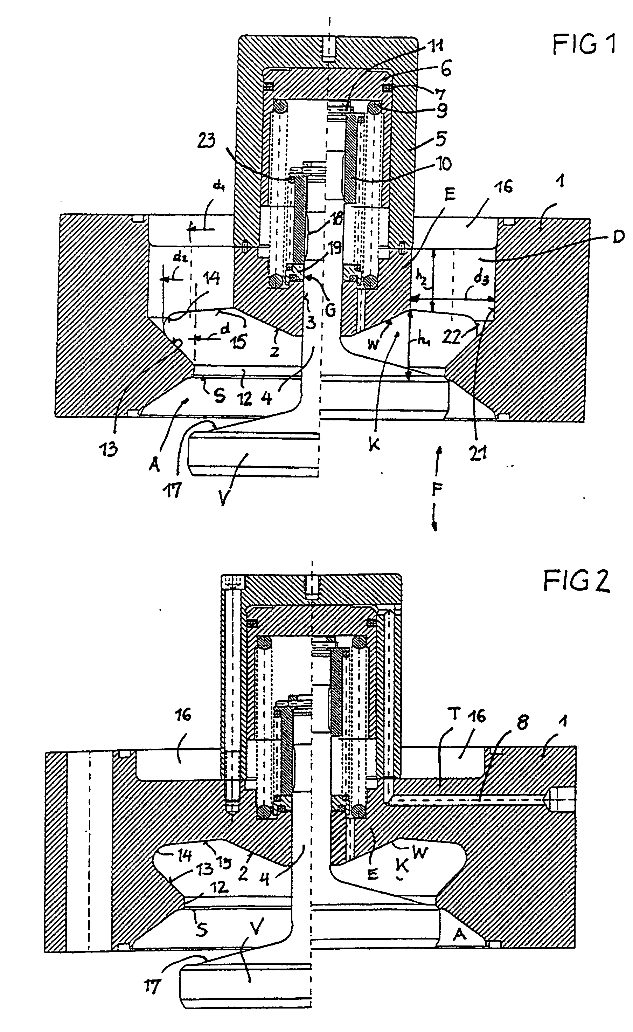

Bei dem erfindungsgemäßen Füllventil F gemäß den Fig. 1, 2 und 3 ist die beim Stand der Technik in Kauf zu nehmende Querschnittsengstelle im Strömungsweg des Druckmittels beseitigt, d.h. es ist nahezu der gesamte Nennquerschnitt auch im Eintrittsbereich des Druckmittels aus den Durchgängen D in die Füllkammer K und durch die Füllkammer bis in den Ventilsitz S für die Druckmittelströmung nutzbar. Bei dem erfindungsgemäßen Füllventil F werden Komponenten des bekannten Füllventils entsprechende Komponenten mit denselben Bezugszeichen versehen, hingegen unterschiedliche Merkmale durch weitere Bezugszeichen hervorgehoben.

Im Gehäuse 1 der Fig. 1, 2 und 3 ist der mit dem Ventilelement V nach Art eines Sitzventils zusammenarbeitende Ventilsitz S zwischen der Arbeitskammer A und der Füllkammer K geformt. Das Gehäuse 1 kann aus Stahl bestehen, wobei der Ventilsitz S durch entsprechende Feinbearbeitung (ggfs. gehärteter Stahl) gebildet ist. Die Füllkammerwandung W beginnt angrenzend an den Ventilsitz S mit einem kurzen, zylindrischen Ansatz 12 und knickt dann gegenüber der Projektion des Ventilsitzdurchmessers d in Schaftrichtung schräg nach außen ab. Der anschließende Wandabschnitt 13 ist kegelig und verläuft über einen konkaven Übergang 14 in einen nach innen zur Einstelleinrichtung E gerichteten Wandabschnitt 15, der annähernd parallel zur Oberseite 17 des Ventilelementes V ist, oder nahezu senkrecht zur Achse des Schaftes 4 verläuft. Der Wandabschnitt 15 trifft auf die Endwand 2 der Einstelleinrichtung E, die, ausgehend von dem Schaftdurchgang 3 schräg und in Richtung vom Ventilsitz S weg nach oben verläuft. Bei der Verschneidung zwischen dem Wandabschnitt 15 und der Endwand 2 liegt die größte, in Schaftrichtung gesehene Höhe h1 der Füllkammer K vor.

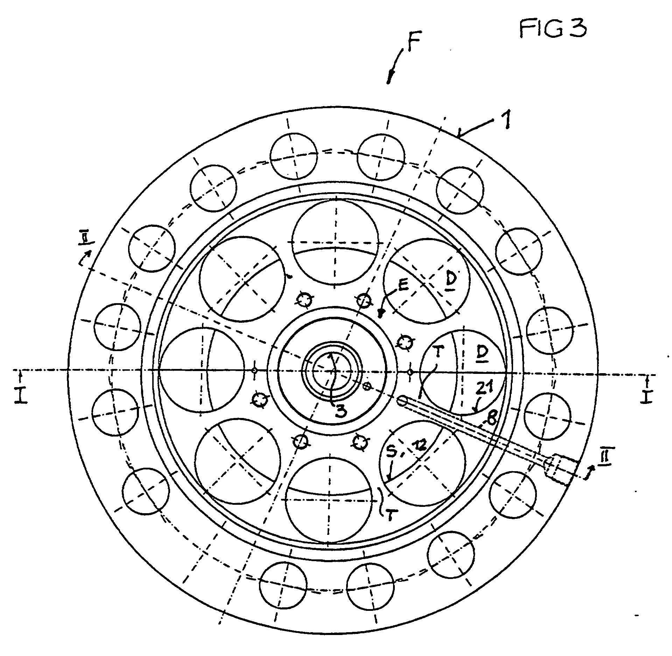

Die Durchgänge D sind (Fig. 3) regelmäßig um die Einstelleinrichtung E verteilte, zylindrische Bohrungen 21, deren jede einen Durchmesser d3 und eine schaftparallele Bohrungsachse hat, die auf einem Teilkreis mit dem Durchmesser d1 liegt. Zwischen den Durchgängen D (bei der gezeigten Ausführungsform sind acht Durchgänge D vorgesehen) liegen die Tragstege T (Fig. 2) vor, die eine in etwa in radialer Richtung gleichbleibende Höhe h2 haben. Der Durchmesser d3 jedes Durchgangs D ist so gewählt, dass die äußeren Konturen der Durchgänge D außerhalb des maximalen Durchmessers d2 (im Übergang 14) der Füllkammer K liegen. Um hier einwandfreie Strömungsverhältnisse zu schaffen, ist jede Bohrung 21 mit einer kegeligen Verlängerung 22 ausgebildet, die sich mit dem Übergang 14 verschneidet und eine geradlinige Verlängerung im Wandabschnitt 13 findet. An der Gehäuseoberseite ist eine umlaufende Vertiefung 16 geformt, in der die Durchgänge D zur Füllkammer K beginnen. Die Vertiefung 16 könnte wesentlich seichter als gezeigt sein.

In dem auf der Einstelleinrichtung E befestigten Gehäuse 5 ist der Entsperrkolben 6 mit seiner Dichtung 7 geführt, der aus dem durch einen Tragsteg T geführten Entsperrkanal 8 hydraulisch beaufschlagbar ist, und zwar gegen die Rückstellfeder 9, die sich mit ihrem unteren Ende in der Einstellvorrichtung E abstützt. Die Mutter 10 ist auf dem Schaft 4 verschraubt und durch die Sicherung 11 festgelegt Sie wird durch die Nachsaugfeder 12 beaufschlagt, die auf einem Ring 19 abgestützt ist, der eine Aufschlagdämpfvorrichtung G bildet und auf der Einstelleinrichtung E abgestützt ist Ferner ist aus Sicherheitsgründen im Schaft 4 ein Dehnabschnitt 18 geformt.

In Fig. 4 ist abweichend von Fig. 1 die Außenkontur der Durchgänge in den Übergang 14 ohne Aufweitung übergeführt. Die Unterseiten 15 der Tragstege sind in etwa parallel zur Gehäuseoberseite und weiter nach oben verlagert. Die Vertiefung 16 ist ganz seicht. Daraus resultieren verbesserte Durchströmverhältnisse.

Die Funktion des Füllventils der Fig. 1 bis 4 stimmt mit der Funktion des bekannten Füllventils gemäß Fig. 4 überein, mit dem Unterschied, dass im Übergang von den Durchgängen D in die Füllkammer K und durch die Füllkammer K bis durch den Ventilsitz S durch die erfindungsgemäße Ausbildung der Füllkammerwandung W und die Anordnung der Durchgänge D problemlos ca. 90 % oder sogar mehr des Nennquerschnitts für die Druckmittelströmung nutzbar sind, der definiert wird durch den Querschnitt des Ventilsitzes S abzüglich des Querschnitts des Schafts 4.

## Patentansprüche

1. Füllventil (F), insbesondere für eine hydraulische Presse, mit einem Gehäuse (1), in dem ein ringförmiger, mit einem Ventilelement (V) zusammenwirkender Ventilsitz (S) einen Arbeitsraum (A) von einer zum Ventilsitz konzentrischen Füllkammer (K) trennt, mit mehreren im Gehäuse vorgesehenen Tragstegen (T), die eine Verstelleinrichtung (E) für einen Ventilschaft (4) des aus einer Schließstellung am Ventilsitz in eine Offenstellung verstellbaren Ventilelements (V) zentral abstützen, und mit zwischen den Tragstegen (T) geformten Durchgängen (D) zur Füllkammer, die dem Ventilsitz gegenüberliegend eine Füllkammerwandung (VV) aufweist, in der die Durchgänge (D) münden, wobei die Füllkammerwandung (VV) in einem Wandabschnitt (13) angrenzend an den Ventilsitz (S) über den in Schaftrichtung projezierten Ventilsitzdurchmesser (d) nach außen in Richtung von der Einstelleinrichtung (E) und vom Ventilsitz (S) weg zurückweichend kegelig ausgebildet ist und die Durchgänge (D) in die Füllkammerwandung (W) zumindest teilweise außerhalb des in Schaftrichtung projezierten Ventilsitzdurchmessers münden, **dadurch gekennzeichnet, dass** sich die Füllkammerwandung (VV) von einem zentralen Ventilschaftdurchgang (3) der Verstelleinrichtung (E) entlang einer Endwand (2) der Verstelleinrichtung (E) über einen an den Tragstegen (T) vorgesehenen, sich mit der Endwand (2) verschneidenden Wandabschnitt (15) bis in den kegeligen Wandabschnitt (13) erstreckt, dass der Wandabschnitt (15) annähernd parallel zur Oberseite (17) des Ventilelements (V) oder nahezu senkrecht zur Achse des Ventilschafts (4) ist, dass die Endwand (2) ausgehend vom Ventilschaftdurchgang (3) schräg in Richtung vom Ventilsitz (S) weg bis zum Wandabschnitt (15) verläuft, derart, dass die größte in Schaftrichtung gesehene Höhe (h) der Füllkammer (K) bei der Verschneidung zwischen dem Wandabschnitt (15) und der Endwand (2) vorliegt, und dass das Ventilelement (V) in der Offenstellung zu der der Füllkammer (K) abgewandten Seite vom Ventilsitz (S) wegverstellt ist.

2. Füllventil nach Anspruch 1, **dadurch gekennzeichnet, dass** die Endwand (2) der Ver-Verstelleinrichtung (E) in der Füllkammer (K) nach außen bis zu den Tragstegen (T) allmählich vom Ventilsitz (S) zurückweichend ausgebildet ist.

3. Füllventil nach Anspruch 1, **dadurch gekennzeichnet, dass** ein außenliegender Übergang (14) vom Wandabschnitt (13) in die Tragstege (T) konkav gerundet ist.

4. Füllventil nach Anspruch 3, **dadurch gekennzeichnet, dass** die Durchgänge (D) zumindest in etwa schaftparallele zylindrische Bohrungen (21) sind, und dass jede Bohrung (21) im Bereich des Übergangs (14) eine kegelige Verlängerung (22) aufweist, deren Kegelwinkel derart gewählt ist, dass - in einem Achsschnitt des Füllventils - die Kegelerzeugende zumindest in etwa mit der Erzeugenden des Wandabschnitts (13) bis zum Übergang (14) fluchtet.

5. Füllventil nach Anspruch 1, **dadurch gekennzeichnet, dass** die Tragstege (T) - in Schaftrichtung gesehen - annähernd konstante Höhen (h2) haben.

6. Füllventil nach Anspruch 1, **dadurch gekennzeichnet, dass** der maximale Durchmesser (d2) der Füllkammer (K) ca. 120 % bis 140 % des Ventilsitzdurchmessers (d) beträgt.

7. Füllventil nach Anspruch 1, **dadurch gekennzeichnet, dass** die größte Höhe (h) der Füllkammer (K) - in Schaftrichtung gesehen - ca. 20 % bis 30 %, vorzugsweise etwa 27 %, des Ventilsitzdurchmesser (d) beträgt.

8. Füllventil nach Anspruch 1, **dadurch gekennzeichnet, dass** die Durchgänge (D) mit einem Durchmesser (d3) von jeweils ca. 33 % des Ventilsitzdurchmessers (d) auf einem Teilkreis (d1) mit ca. 105 % des Ventilsitzdurchmessers (d) angeordnet sind, vorzugsweise bei einem Ventilsitzdurchmesser (d) von ca. 197 mm acht Bohrungen (21) mit jeweils einem Durchmesser (d3) von ca. 65 mm mit ihren Bohrungsachsen auf einem Teilkreis mit ca. 205 mm Durchmesser (d1).

## Claims

1. Filling valve (F), in particular for a hydraulic press, with a housing (1), in which an annular valve seat (S) cooperating with a valve element (V) separates a working space (A) from a filling chamber (K) concentric to the valve seat, with a plurality of carrying webs (T) which are provided in the housing and which centrally support an adjusting device (E) for a valve shank (4) of the valve element (V) adjustable from a closing position on the valve seat into an open position, and with passages (D), formed between the carrying webs (T), to the filling chamber which, opposite the valve seat, has a filling-chamber wall (W), in which the passages (D) issue, the filling-chamber wall (W) being designed, in a wall portion (13) adjoining the valve seat (S), to taper outwards in the direction away from the adjusting device (E) and from the valve seat (S) over the valve-seat diameter (d) projected in the shank direction, and the passages (D) issuing into the filling-chamber wall (W) at least partially outside the valve-seat diameter projected in the shank direction, **characterized in that** the filling-chamber wall (W) extends from a central valve-shank passage (3) of the adjusting device (E) along an end wall (2) of the adjusting device (E), over a wall portion (15) provided on the carrying webs (T) and intersecting with the end wall (2), into the tapering wall portion (13), **in that** the wall portion (15) is approximately parallel to the topside (17) of the valve element (V) or virtually perpendicular to the axis of the valve shank (4), **in that** the end wall (2), starting from the valve shank passage (3), runs obliquely in the direction away from the valve seat (S) as far as the wall portion (15), in such a way that the greatest height (h), seen in the shank direction, of the filling chamber (K) is present at the intersection between the wall portion (15) and the end wall (2), and **in that**, in the open position, the valve element (V) is adjusted away from the valve seat (S) to the side facing away from the filling chamber (K).

2. Filling valve according to Claim 1, **characterized in that** the end wall (2) of the adjusting device (E) in the filling chamber (K) is designed to extend gradually back from the valve seat (S) outwards as far as the carrying webs (T).

3. Filling valve according to Claim 1, **characterized in that** an outer transition (14) from the wall portion (13) into the carrying webs (T) is rounded concavely.

4. Filling valve according to Claim 3, **characterized in that** the passages (D) are at least approximately shank-parallel cylindrical bores (21), and **in that** each bore (21) has, in the region of the transition (14), a tapering prolongation (22), the taper angle of which is selected such that, in an axial section through the filling valve, the taper generatrix is aligned at least approximately with the generatrix of the wall portion (13) as far as the transition (14).

5. Filling valve according to Claim 1, **characterized in that** the carrying webs (T), seen in the shank direction, have approximately constant heights (h2).

6. Filling valve according to Claim 1, **characterized in that** the maximum diameter (d2) of the filling chamber (K) is approximately 120% to 140% of the valve-seat diameter (d).

7. Filling valve according to Claim 1, **characterized in that** the greatest height (h) of the filling chamber (K), seen in the shank direction, is approximately 20% to 30%, preferably about 27%, of the valve-seat diameter (d).

8. Filling valve according to Claim 1, **characterized in that** the passages (D), having a diameter (d3) of approximately 33% of the valve-seat diameter (d) in each case, are arranged on a part-circle (d1) having approximately 105% of the valve-seat diameter (d), preferably, in the case of a valve-seat diameter (d) of approximately 197 mm, eight bores (21), each with a diameter (d3) of approximately 65 mm, with their bore axes on a part-circle having a diameter (d1) of approximately 205 mm.

## Revendications

1. Soupape de remplissage (F), en particulier pour une presse hydraulique, comprenant un corps (1) dans lequel un siège de soupape annulaire (S), qui coopère avec un élément de soupape (V), sépare un espace de travail (A) d'un compartiment de remplissage (K) concentrique au siège de soupape, plusieurs traverses de support (T) prévues dans le corps qui supportent de façon centrale un dispositif de réglage (E) pour une tige de soupape (4) de l'élément de soupape (V) mobile d'une position de fermeture sur le siège de soupape dans une position d'ouverture, et des passages (D) formés entre les traverses de support (T) en direction du compartiment de remplissage, qui présente en vis-à-vis du siège de soupape une paroi de compartiment de remplissage (W) dans laquelle débouchent les passages (D), la paroi de compartiment de remplissage (W) étant réalisée en cône dans une section de paroi (13), limitrophe du siège de soupape (S), en s'écartant vers l'extérieur sur le diamètre (d) du siège de soupape, projeté dans la direction de la tige, en direction du dispositif de réglage (E) et à l'écart du siège de soupape (S), et les passages (D) débouchant dans la paroi de compartiment de remplissage (W), au moins en partie, à l'extérieur du diamètre du siège de soupape projeté dans la direction de la tige, **caractérisée en ce que** la paroi de compartiment de remplissage (W) s'étend d'un passage de tige de soupape (3) central du dispositif de réglage (E) le long d'une paroi extrême (2) du dispositif de réglage (E), par l'intermédiaire d'une section de paroi (15) prévue sur les traverses de support (T) et se coupant avec la paroi extrême (2), jusqu'à la section de paroi (13) conique, que la section de paroi (15) est à peu près parallèle au côté supérieur (17) de l'élément de soupape (V) ou pratiquement perpendiculaire à l'axe de la tige de soupape (4), que la paroi extrême (2) s'étend en oblique à partir du passage de tige de soupape (3) à l'écart du siège de soupape (S) jusqu'à la section de paroi (15), de telle sorte que la hauteur maximale (h) du compartiment de remplissage (K), vue dans la direction de la tige, se situe à l'intersection de la section de paroi (15) et de la paroi extrême (2), et que l'élément de soupape (V) est déplacé dans la position d'ouverture à l'écart du côté du siège de soupape (S) opposé au compartiment de remplissage (K).

2. Soupape de remplissage suivant la revendication 1, **caractérisée en ce que** la paroi extrême (2) du dispositif de réglage (E) est réalisée dans le compartiment de remplissage (K) en s'écartant graduellement vers l'extérieur du siège de soupape (S) jusqu'aux traverses de support (T).

3. Soupape de remplissage suivant la revendication 1, **caractérisée en ce qu'**une transition extérieure (14) entre la section de paroi (13) et les traverses de support (T) est arrondie de façon concave.

4. Soupape de remplissage suivant la revendication 3, **caractérisée en ce que** les passages (D) sont des trous (21) cylindriques au moins à peu près parallèles à la tige, et que chaque trou (21) présente dans la zone de la transition (14) un prolongement conique (22), dont l'angle de cône est choisi de telle sorte que - dans une section axiale de la soupape de remplissage - la génératrice du cône est alignée au moins à peu près avec la génératrice de la section de paroi (13) jusqu'à la transition (14).

5. Soupape de remplissage suivant la revendication 1, **caractérisée en ce que** les traverses de support (T) - vues dans la direction de la tige - ont à peu près des hauteurs constantes (h2).

6. Soupape de remplissage suivant la revendication 1, **caractérisée en ce que** le diamètre maximal (d2) du compartiment de remplissage (K) est environ égal à 120 à 140 % du diamètre (d) du siège de soupape.

7. Soupape de remplissage suivant la revendication 1, **caractérisée en ce que** la hauteur maximale (h) du compartiment de remplissage (K) - vue dans la direction de la tige - est égale à 20 à 30 %, de préférence environ 27 %, du diamètre (d) du siège de soupape.

8. Soupape de remplissage suivant la revendication 1, **caractérisée en ce que** les passages (D) ayant chacun un diamètre (d3) d'environ 33% du diamètre (d) du siège de soupape sont disposés sur un cercle partiel (d1) d'environ 105 % du diamètre (d) du siège de soupape, de préférence huit trous (21) ayant chacun un diamètre (d3) d'environ 65 mm pour un diamètre (d) du siège de soupape d'environ 197 mm avec leurs axes sur un cercle partiel d'un diamètre (d1) d'environ 205 mm.
